# FASCICULE DE BREVET EUROPEEN

(11) **EP 0 803 478 B1**
(45) Date de publication et mention de la délivrance du brevet: **15.09.1999**
(21) Numéro de dépôt: 97400881.5
(22) Date de dépôt: 21.04.1997
(51) Int. Cl.: C03B 37/027, C03B 37/029

(54) **Dispositif de fibrage d'une préforme de fibre optique**
Vorrichtung zum Ziehen einer optischen Faser aus einer Vorform
Apparatus for drawing an optical fibre from a preform

(30) Priorité: 23.04.1996 FR 9605100
(43) Date de publication de la demande: 29.10.1997
(73) Titulaire: ALCATEL, 75008 Paris (FR)
(72) Inventeur: Drouart, Alain, 92000 Nanterre (FR); Matau, Max, 92390 Villeneuve La Garenne (FR); Mazabraud, Pascal, 93330 Neuilly sur Marne (FR)
(74) Mandataire: Feray, Valérie

(56) Documents cités:
- US-A- 4 154 592
- PATENT ABSTRACTS OF JAPAN vol. 14, no. 390 (C-751) & JP 02 145452 A (FURUKAWA ELECTRIC CO. LTD.), 4 Juin 1990,
- PATENT ABSTRACTS OF JAPAN vol. 15, no. 167 (C-827) & JP 03 037128 A (FUJIKURA LTD.), 18 Février 1991,

## Description

La présente invention concerne un dispositif de fibrage d'une préforme de fibre optique, et plus particulièrement un tel dispositif dans lequel la préforme, en un matériau vitreux, est munie à l'une de ses extrémités d'un embout. Cet embout, dit embout de fibrage, est en général également en un matériau vitreux, de moins bonne qualité que celui constituant la préforme. Il sert à maintenir la préforme dans le dispositif de fibrage, pour éviter de détériorer la préforme elle-même.

D'une manière générale, un dispositif de fibrage de ce type, tel que celui décrit dans la demande de brevet JP-A-03 037 128, comprend :
- des moyens de maintien de la préforme verticalement par l'intermédiaire de l'embout, l'extrémité inférieure de la préforme étant libre et son extrémité supérieure étant celle raccordée à l'embout,
- des moyens de déplacement vertical vers le bas de la préforme, pour faire pénétrer et avancer son extrémité inférieure dans une chambre du dispositif de fibrage présentant à cet effet une ouverture à sa partie supérieure, cette chambre étant isolée à sa partie supérieure vis-à-vis du milieu extérieur lorsque la préforme est présente dans l'ouverture,
- des moyens de chauffage pour porter cette chambre à une température au moins égale à la température de fibrage du matériau vitreux constituant la préforme, de manière à fibrer la préforme au fur et à mesure de son déplacement dans la chambre.

Dans ces dispositifs, il est très important d'éviter que le milieu extérieur perturbe l'intérieur de la chambre de fibrage. En effet, des perturbations, notamment des perturbations thermiques dues au fait que le milieu extérieur à la chambre est à une température beaucoup moins élevée que la température de fibrage (typiquement de l'ordre de 2000°C) peuvent entraîner des variations du diamètre de la fibre optique produite. Ces perturbations peuvent également détériorer les moyens de chauffage du dispositif de fibrage en cas d'entrée d'air suite à une défaillance des joints d'étanchéité.

La protection de l'intérieur de la chambre de fibrage vis-à-vis du milieu extérieur est donc particulièrement importante à la partie supérieure de la chambre, par laquelle pénètre la préforme. La partie inférieure de la chambre par laquelle sort la fibre optique est constituée d'un orifice calibré de faible diamètre assurant l'étanchéité par surpression contrôlée à l'intérieur de la chambre de fibrage.

Pour protéger la partie supérieure de la chambre de fibrage contre les perturbations du milieu extérieur, une première solution connue consiste à disposer au niveau de l'ouverture de la partie supérieure de la chambre un joint d'étanchéité de diamètre constant.

On comprend bien qu'un tel joint n'est pas satisfaisant lorsque l'embout de fibrage a un diamètre inférieur à celui de la préforme. En effet, en fin de fibrage, la partie de préforme restant à fibrer est très courte et par conséquent, c'est l'embout qui avance dans l'ouverture de la partie supérieure de la chambre de fibrage. Dans ce cas, l'étanchéité de la chambre de fibrage vis-à-vis du milieu extérieur ne peut plus être assurée, avec toutes les conséquences préjudiciables qui ont été mentionnées plus haut.

On pourrait alors penser à utiliser un embout de fibrage ayant un diamètre identique à celui de la préforme, de sorte que le joint disposé dans l'ouverture de la partie supérieure de la chambre de fibrage continue à jouer son rôle lors du passage de l'embout dans l'ouverture. Cette solution n'est cependant pas satisfaisante pour plusieurs raisons.

En premier lieu, l'embout de diamètre inférieur à celui de la préforme mentionné ci-dessus présente l'avantage d'être celui utilisé pour maintenir la préforme lors de sa fabrication, et notamment lors de l'étape de recharge plasma. Si l'on souhaite utiliser pour le fibrage un embout de diamètre identique à celui de la préforme, il faut scier l'embout initial et souder un nouvel embout ce qui ajoute des opérations et diminue donc le rendement de fabrication des fibres optiques. De plus, ces opérations risquent de polluer la surface de la préforme et donc d'entraîner une rupture de cette dernière.

En outre, l'utilisation d'un embout de diamètre identique à celui de la préforme est onéreuse, puisqu'un tel embout nécessite l'utilisation de plus de matière qu'un embout de diamètre inférieur.

Enfin, le diamètre de la préforme n'étant pas strictement identique d'une préforme à l'autre, il est nécessaire pour chaque préforme de mesurer son diamètre puis d'usiner un embout de diamètre identique, ce qui est, on le comprend, est très onéreux.

Une autre solution, tel que celui décrit dans le brevet US-A-4 154 592, envisagée pour maintenir l'étanchéité en partie supérieure de la chambre de fibrage consiste à placer au niveau de cette partie supérieure une enceinte dont une partie inférieure est en contact avec la partie supérieure de la chambre de fibrage, et dont la partie supérieure est munie d'un joint d'étanchéité au diamètre de l'embout, de diamètre inférieur à celui de la préforme.

Le problème de cette solution réside dans le fait que, les préformes ayant à l'heure actuelle des longueurs importantes, de l'ordre de 80 cm à 1 m, et la température de fibrage étant atteinte dans la chambre de fibrage à environ 25 cm en dessous de l'ouverture de sa partie supérieure, il est nécessaire d'utiliser une enceinte ayant une hauteur relativement importante, au moins égale à la longueur de la préforme, pour maintenir l'étanchéité tout au long du fibrage. Il est également nécessaire pour cela d'utiliser un embout de longueur au moins égale à celle de l'enceinte, afin de pouvoir maintenir et déplacer la préforme pendant toute l'opération de fibrage.

Ceci accroît les dimensions du dispositif de fibrage. De plus, l'enceinte elle-même est onéreuse, et enfin, du fait de la longueur totale de l'ensemble embout de fibrage-préforme, on observe des vibrations de cet ensemble durant le fibrage qui entraînent des variations du diamètre de la fibre optique produite, et donc une détérioration de ses performances.

Le but de l'invention est donc de mettre au point un dispositif de fibrage dans lequel l'étanchéité de la partie supérieure de la chambre de fibrage est assurée tout au long du fibrage notamment lorsque le diamètre de l'embout de fibrage est inférieur à celui de la préforme, et dans lequel la fibre optique produite ne subit pas de détérioration de ses caractéristiques.

La présente invention propose à cet effet un dispositif de fibrage d'une préforme de fibre optique en un matériau vitreux munie à l'une de ses extrémités d'un embout de diamètre inférieur ou égal au diamètre de ladite préforme, ledit dispositif comprenant :
- des moyens de maintien de ladite préforme sensiblement verticalement par l'intermédiaire dudit embout, de sorte que ladite préforme installée dans ledit dispositif comporte une extrémité inférieure libre et une extrémité supérieure qui est celle à laquelle est raccordé ledit embout,
- des moyens de déplacement de ladite préforme selon une direction sensiblement verticale vers le bas de sorte que son extrémité inférieure pénètre et avance dans une chambre présentant à cet effet une ouverture à sa partie supérieure, la partie supérieure de ladite chambre étant isolée vis-à-vis du milieu extérieur lorsque ladite préforme est présente dans ladite ouverture,
- des moyens de chauffage pour porter ladite chambre à une température au moins égale à la température de fibrage dudit matériau vitreux, de manière à fibrer ladite préforme au fur et à mesure de son déplacement dans ladite chambre,
**caractérisé en ce que** ladite préforme est munie au niveau de sa jonction avec ledit embout de moyens d'étanchéité se déplaçant avec elle et tels que la partie supérieure de ladite chambre reste isolée vis-à-vis du milieu extérieur lorsque ledit embout pénètre dans ladite chambre.

Grâce à l'invention, puisque les moyens d'étanchéité se déplacent avec la préforme, il n'est pas nécessaire qu'ils aient une longueur aussi importante que celle de l'enceinte utilisée dans certains des dispositifs de l'art antérieur. L'embout n'a donc pas non plus une telle longueur, de sorte que le coût du dispositif est plus faible et les problèmes de vibrations sont évités.

Selon l'invention, il est possible d'utiliser de tels moyens d'étanchéité grâce à la combinaison des deux caractéristiques suivantes : maintien de l'étanchéité à la partie supérieure de la chambre de fibrage lorsque la préforme se trouve dans l'ouverture de cette partie supérieure, d'une part, et maintien de l'étanchéité lorsque l'embout pénètre dans la chambre de fibrage d'autre part.

L'invention permet donc d'éviter l'utilisation d'un embout de même diamètre que celui de la préforme tout en garantissant le maintien de l'étanchéité en partie supérieure de la chambre de fibrage et ce tout au long du fibrage et en évitant les problèmes de vibrations des solutions antérieures assurant un tel maintien.

Selon une mode de réalisation particulièrement avantageux, les moyens d'étanchéité comprennent une enceinte entourant la jonction entre l'embout et la préforme, l'enceinte étant apte à se déplacer avec la préforme jusqu'au moment où sa partie inférieure entre en contact avec la partie supérieure de la chambre, et étant munie à sa partie supérieure d'un moyen pour assurer, lorsque l'enceinte est en contact avec la partie supérieure de la chambre, l'étanchéité de cette dernière vis-à-vis du milieu extérieur.

D'autres caractéristiques et avantages de la présente invention apparaîtront dans la description suivante, donnée à titre illustratif et nullement limitatif, d'un mode de réalisation du dispositif selon la présente invention.

Dans les figures suivantes :
- la figure 1 est une vue très schématique d'un dispositif de fibrage selon l'invention, dans la position qu'occupent les différents éléments en début de fibrage,
- la figure 2 est une vue très schématique d'un dispositif de fibrage selon l'invention, dans la position qu'occupent les différents éléments en cours de fibrage,
- la figure 3 est une vue très schématique d'un dispositif de fibrage selon l'invention, dans la position qu'occupent les différents éléments en fin de fibrage,
- la figure 4 est une vue partiellement en coupe de la partie IV de la figure 3.

Dans toutes ces figures, les éléments communs portent les mêmes numéros de référence.

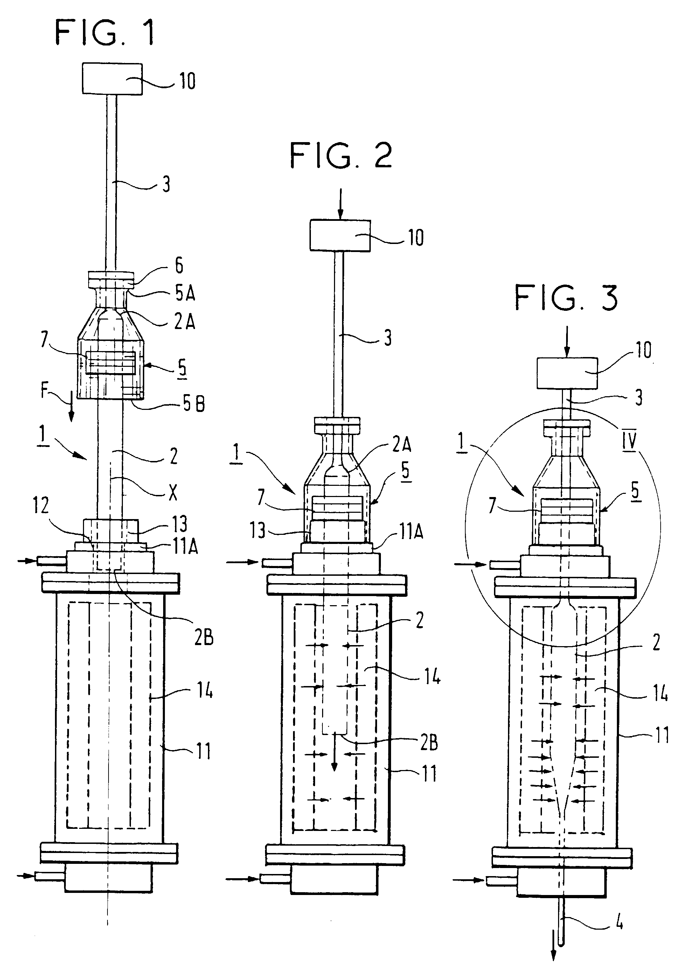

On voit aux figures 1 à 3 un dispositif de fibrage 1 selon l'invention, pour le fibrage d'une préforme de fibre optique 2 en un matériau vitreux, de diamètre compris entre 40 et 100 mm, munie à l'une de ses extrémités 2A d'un embout de fibrage 3 en un matériau vitreux de diamètre inférieur au sien, par exemple de l'ordre de 30 mm. L'autre extrémité 2B de la préforme 2 est libre.

Le dispositif 1 comporte un mandrin 10 pour maintenir la préforme 2 verticalement par l'intermédiaire de l'embout 3 de sorte que l'extrémité 2A de la préforme 2 constitue son extrémité supérieure dans le dispositif 1, et que l'extrémité libre 2B de la préforme 2 constitue son extrémité inférieure dans le dispositif 1. Le mandrin 10 sert également à animer la préforme 2 maintenue d'un mouvement de translation vers le bas le long de son axe X à l'intérieur du dispositif 1, dans le sens de la flèche F représentée sur la figure 1.

Le dispositif 1 comporte en outre une chambre de fibrage cylindrique 11 comprenant à sa partie supérieure 11A une ouverture 12 pour le passage de la préforme 2 lors de son déplacement, cette ouverture 12 se trouvant le long de la direction de déplacement de la préforme 2 et étant munie d'un joint d'étanchéité 13 constitué par exemple d'un feutre de graphite, tel que celui décrit notamment dans la demande de brevet DE-A-40 06 839. Le joint d'étanchéité 13 a un diamètre sensiblement égal à celui de la préforme 2 de manière à assurer l'étanchéité de la chambre 11 lorsque la préforme 2 pénètre et se déplace dans l'ouverture 12.

La chambre 11 est entourée de moyens de chauffage adaptés 14 permettant de la porter à une température au moins égale à la température de fibrage du matériau vitreux constituant la préforme 2. Les moyens de chauffage 14, classiques, ne seront pas décrits plus en détail ici. Leur choix est à la portée de l'homme du métier.

La préforme 2 est portée dans la chambre 11 à une température au moins égale à sa température de fibrage de sorte qu'elle est fibrée au fur et à mesure de son déplacement assuré par le mandrin 10 en une fibre optique 4 (voir figure 3).

Selon l'invention, la préforme 2 est munie, au niveau de son extrémité supérieure 2A raccordée à l'embout 3 d'une enceinte 5 en silice qui lui est fixée, cette enceinte 5 étant fixe par rapport à la préforme 2 et à l'embout 3 mais mobile avec ces derniers par rapport au dispositif 1 lors du déplacement de la préforme 2. L'enceinte 5 a une partie inférieure 5B de diamètre au moins égal au diamètre de la préforme, et une partie supérieure 5A munie d'un joint d'étanchéité 6 constitué par exemple d'un feutre de graphite ou de silice, de diamètre sensiblement égal à celui de l'embout 3.

L'enceinte 5 peut être constituée par exemple de silice, mais plus généralement de tout matériau réfractaire résistant aux températures élevées de l'ordre de celle de fibrage du matériau vitreux constituant la préforme 2, sans subir de déformations et sans avoir à être refroidi. Ce peut être par exemple du graphite. Il est en outre préférable que l'enceinte 5 soit transparente pour permettre d'observer la préforme 2 et l'embout 3 au cours de leur déplacement.

Il est préférable que la partie inférieure 5B de l'enceinte 5 permette d'assurer une bonne étanchéité de la partie supérieure 11A de la chambre 11 lorsqu'elle vient en contact avec cette dernière. Pour cela, il est possible soit d'assurer un état de surface parfaitement lisse à la fois de la partie supérieure 11A de la chambre 11 et de la partie inférieure 5B de l'enceinte 5, soit de munir cette dernière d'une rondelle intermédiaire (non représentée) assurant l'étanchéité, par exemple en feutre ou en papier graphite.

Grâce à l'invention, lorsque, en début de fibrage (voir figure 1) c'est la préforme 2 qui se déplace dans l'ouverture 12 munie de son joint d'étanchéité 13, la chambre de fibrage 11 est isolée vis-à-vis du milieu extérieur grâce au joint 13, puis lorsque, en fin de fibrage (voir figure 3), c'est l'embout 3 qui pénètre et se déplace dans l'ouverture 12, l'enceinte 5 étant au préalable, au cours du déplacement de la préforme 2 (voir figure 2), entrée en contact avec la partie supérieure 11A de la chambre 11, cette dernière est isolée vis-à-vis du milieu extérieur grâce à l'enceinte 5 et au joint d'étanchéité 6 dont elle est munie à sa partie supérieure 5A.

L'étanchéité est donc maintenue tout au long du fibrage grâce à des moyens simples, peu onéreux et n'entraînant pas de dégradations des performances de la fibre optique 4 obtenue.

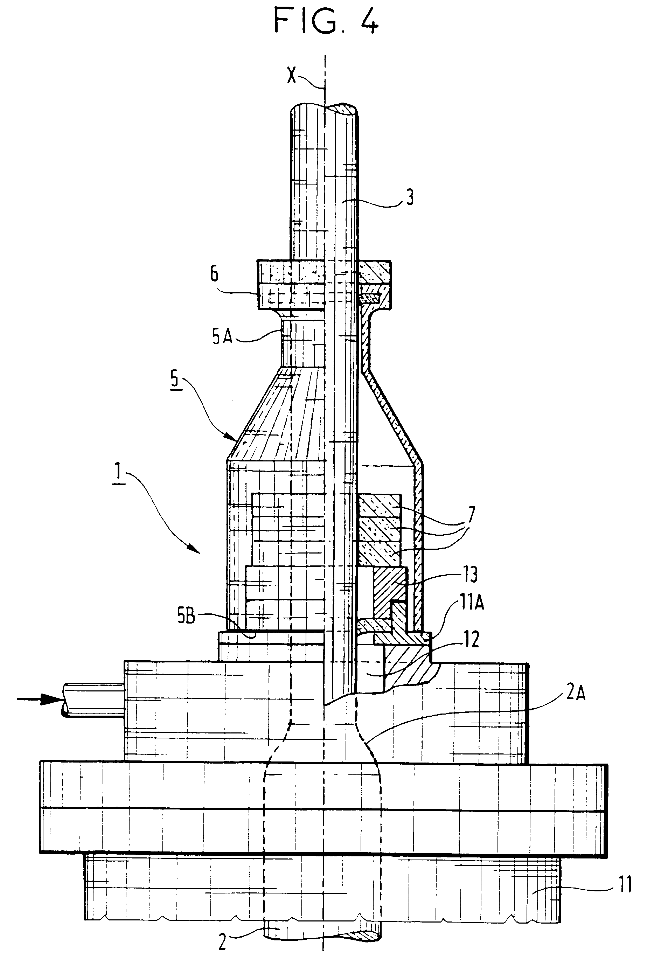

On peut disposer un ou plusieurs joints d'étanchéité additionnels 7 (voir figure 4) en silice ou en graphite autour de l'extrémité 2A de la préforme 2 au niveau de laquelle se situe la jonction avec l'embout 3. Les joints 7 se déplacent avec la préforme 2 et viennent en appui contre la partie supérieure 11A de la chambre 11 lorsque la partie inférieure 5B de l'enceinte 5 vient au contact de cette dernière.

Ces joints additionnels permettent d'assurer une double étanchéité en cas de dégradation du joint 13 et de diminuer le volume de remplissage du gaz ambiant dans l'enceinte 5 pendant la transition, limitant ainsi les risques de défaut sur la fibre.

D'autre part, il est préférable de toujours associer, au niveau de chaque zone d'étanchéité (joint 6, joint 13) un feutre de graphite et un feutre de silice, ce en vue de renforcer cette étanchéité. Le joint de graphite assure en effet une meilleure étanchéité que le joint de silice, qui présente une meilleure tenue thermique aux températures auxquelles il est soumis.

Bien entendu, la présente invention n'est pas limitée au mode de réalisation qui vient d'être décrit.

En particulier, les différents joints d'étanchéité peuvent être constitués de tout matériau convenant à leur utilisation autre que le graphite ou la silice, et permettant de préférence à la fois de conserver l'équilibre thermique et l'étanchéité.

## Revendications

1. Dispositif de fibrage d'une préforme (2) de fibre optique en un matériau vitreux munie à l'une de ses extrémités d'un embout (3) de diamètre inférieur ou égal au diamètre de ladite préforme, ledit dispositif comprenant :
- des moyens de maintien (10) de ladite préforme (2) sensiblement verticalement par l'intermédiaire dudit embout (3), de sorte que ladite préforme (2) installée dans ledit dispositif (1) comporte une extrémité inférieure libre (2B) et une extrémité supérieure (2A) qui est celle à laquelle est raccordé ledit embout (3),
- des moyens de déplacement (10) de ladite préforme (2) selon une direction sensiblement verticale vers le bas (F) de sorte que son extrémité inférieure (2B) pénètre et avance dans une chambre (11) présentant à cet effet une ouverture (12) à sa partie supérieure (11A), la partie supérieure (11A) de ladite chambre (11) étant isolée vis-à-vis du milieu extérieur lorsque ladite préforme (2) est présente dans ladite ouverture (12),
- des moyens de chauffage (14) pour porter ladite chambre (11) à une température au moins égale à la température de fibrage dudit matériau vitreux, de manière à fibrer ladite préforme (2) au fur et à mesure de son déplacement dans ladite chambre (11),
**caractérisé en ce que** ladite préforme (2) est munie au niveau de sa jonction avec ledit embout (3) de moyens d'étanchéité (5, 6) se déplaçant avec elle et tels que la partie supérieure (11A) de ladite chambre (11) reste isolée vis-à-vis du milieu extérieur lorsque ledit embout (3) pénètre dans ladite chambre (11).

2. Dispositif selon la revendication 1 caractérisé en ce que lesdits moyens d'étanchéité comprennent une enceinte (5) entourant la jonction entre ledit embout (3) et ladite préforme (2), ladite enceinte (5)étant apte à se déplacer avec ladite préforme (2) jusqu'au moment où sa partie inférieure (5B) entre en contact avec la partie supérieure (11A) de ladite chambre (11), et étant munie à sa partie supérieure (5A) d'un moyen (6) pour assurer, lorsque ladite enceinte (5) est en contact avec la partie supérieure (11A) de ladite chambre (11), l'étanchéité de cette dernière vis-à-vis du milieu extérieur.

3. Dispositif selon la revendication 2 caractérisé en ce que ladite enceinte (5) est en un matériau résistant aux températures élevées de l'ordre de celle de fibrage dudit matériau vitreux.

4. Dispositif selon la revendication 3 caractérisé en ce que ladite enceinte (5) est en un matériau choisi parmi la silice et le graphite.

5. Dispositif selon l'une des revendications 2 à 4 caractérisée en ce que la partie inférieure (5B) de ladite enceinte (5) qui vient en contact avec la partie supérieure (11A) de ladite chambre (11) est telle qu'elle assure l'étanchéité vis-à-vis du milieu extérieur de la partie supérieure (11A) de ladite chambre (11).

6. Dispositif selon l'une des revendications 2 à 5 caractérisé en ce que l'étanchéité au niveau de la partie supérieure (5A) de ladite enceinte (5) et celle au niveau de la partie supérieure (11A) de ladite chambre (11) est assurée au moyen de joints d'étanchéité (13, 6) en matériaux réfractaires.

7. Dispositif selon la revendication 6 caractérisé en ce que lesdits joints (13, 6) comprennent des feutres de graphite et/ou de silice.

## Patentansprüche

1. Vorrichtung zum Faserziehen für den Vorformling (2) einer optischen Faser aus einem glasartigen Material, der an einem seiner Enden mit einem Ansatz (3) ausgestattet ist, dessen Durchmesser kleiner oder gleich zu dem Durchmesser des genannten Vorformlings ist, wobei die Vorrichtung aufweist:
- Mittel zum Festhalten (10) des genannten Vorformlings (2) in etwa vertikaler Richtung vermittels des genannten Ansatzes (3), dergestalt, daß der in der genannten Vorrichtung (1) angeordnete genannte Vorformling (2) ein freies unteres Ende (2B) und ein oberes Ende (2A), mit dem der genannte Ansatz (3) verbunden ist, aufweist,
- Mittel zum Verschieben (10) des genannten Vorformlings (2) in etwa vertikaler Richtung nach unten (F), dergestalt, daß sein unteres Ende (2B) in eine Kammer eindringt (11) und verschoben wird, welche Kammer (11) zu diesem Zweck an ihrem oberen Teil (11A) eine Öffnung (12) aufweist, wobei der obere Teil (11A) der genannten Kammer (11) gegenüber der äußeren Umgebung isoliert ist, wenn sich der genannte Vorformling (2) in der genannten Öffnung (12) befindet,
- Heizmittel (14), um die genannte Kammer (11) auf eine Temperatur zu erwärmen, die wenigstens der Faserziehtemperatur des genannten glasartigen Materials gleich ist, so daß der genannte Vorformling (2) in dem Maße gezogen wird, wie er in der genannten Kammer (11) verschoben wird,
**dadurch gekennzeichnet, daß** der genannte Vorformling (2) in Höhe seiner Verbindung mit dem genannten Ansatz (3) mit Dichtmitteln (5, 6) ausgestattet ist, die mit ihm verschoben werden, so daß der obere Teil (11A) der genannten Kammer (11) gegenüber der äußeren Umgebung isoliert bleibt, wenn der genannte Ansatz (3) in die genannte Kammer (11) eindringt.

2. Vorrichtung nach Anspruch 1,
**dadurch gekennzeichnet, daß** die genannten Dichtmittel eine Umschließung (5) aufweisen, die die Verbindung zwischen dem genannten Ansatz (3) und dem genannten Vorformling (2) umgibt, wobei die genannte Umschließung (5) geeignet ist, mit dem genannten Vorformling (2) bis zu dem Moment verschoben zu werden, wo ihr unterer Teil (5B) in Kontakt mit dem oberen Teil (11A) der genannten Kammer (11) tritt, und an ihrem oberen Teil (5A) mit einem Mittel (6) ausgestattet ist, um, wenn die genannte Umschließung (5)in Kontakt mit dem oberen Teil (11A) der genannten Kammer (11) tritt, die Dichtigkeit dieser letzteren gegenüber der äußeren Umgebung zu gewährleisten.

3. Vorrichtung nach Anspruch 2,
**dadurch gekennzeichnet, daß** die genannte Umschließung (5) aus einem Material besteht, das den erhöhten Temperaturen, die in der Größenordnung von jener für das Faserziehen des genannten glasartigen Materials liegen, widersteht.

4. Vorrichtung nach Anspruch 3,
**dadurch gekennzeichnet, daß** die genannte Umschließung (5) aus einem Material besteht, das unter Kieselerde und Graphit gewählt ist.

5. Vorrichtung nach einem der Ansprüche 2 bis 4,
**dadurch gekennzeichnet, daß** der untere Teil (5B) der genannten Umschließung (5), der in Kontakt mit dem oberen Teil (11A) der genannten Kammer (11) kommt, so ausgeführt ist, daß er die Dichtigkeit des oberen Teils (11A) der genannten Kammer (11) gegenüber der äußeren Umgebung gewährleistet.

6. Vorrichtung nach einem der Ansprüche 2 bis 5,
**dadurch gekennzeichnet, daß** die Dichtigkeit in Höhe des oberen Teils (5A) der genannten Umschließung (5) und jene in Höhe des oberen Teils (11A) der genannten Kammer (11) mittels Dichtungen (13, 6) aus feuerfestem Material gewährleistet wird.

7. Vorrichtung nach Anspruch 6,
**dadurch gekennzeichnet, daß** die genannten Dichtungen (13, 6) Graphit- und/oder Kieselerdefilz umfassen.

## Claims

1. Device for drawing down a vitreous material optical fibre preform (2) provided at one end with a feed rod (3) having a diameter less than or equal to the diameter of said preform, said device including:
- means (10) for holding said preform (2) substantially vertical by means of said feed rod (3) so that said preform (2) installed in said device (1) has a free lower end (2B) and an upper end (2A) joined to said feed rod (3),
- means (10) for displacing said preform (2) in a substantially vertically downwards direction (F) so that its lower end (2B) enters and advances in a chamber (11) having for this purpose an opening (12) in its upper part (11A), the upper part (11A) of said chamber (11) being isolated from the external environment when said preform (2) is present in said opening (12), and
- heating means (14) for heating said chamber (11) to a temperature at least equal to the drawing temperature of said vitreous material, in such manner as to draw down said preform (2) as it moves in said chamber (11),
characterized in that said preform (2) is provided at the level of its junction with said feed rod (3) with sealing means (5, 6) moving with it and such that the upper part (11A) of said chamber (11) continues to be isolated from the external environment when said feed rod (3) enters said chamber (11).

2. Device according to claim 1 characterized in that said sealing means include an enclosure (5) surrounding the junction between said feed rod (3) and said preform (2), said enclosure (5) being adapted to move with said preform (2) until its lower part (5B) comes into contact with the upper part (11A) of said chamber (11) and being provided in its upper part (5A) with means (6) for sealing said chamber (11) from the external environment when said enclosure (5) is in contact with the upper part (11A) of said chamber.

3. Device according to claim 2 characterized in that said enclosure (5) is made from a material resistant to high temperatures in the order of the drawing temperature of said vitreous material.

4. Device according to claim 3 characterized in that said enclosure (5) is made from a material chosen from silica and graphite.

5. Device according to any one of claims 2 to 4 characterized in that the lower part (5B) of said enclosure (5) which comes into contact with the upper part (11A) of said chamber (11) seals the upper part (11A) of said chamber (11) from the external environment.

6. Device according to any one of claims 2 to 5 characterized in that the seal at the level of the upper part (5A) of said enclosure (5) and that at the level of the upper part (11A) of said chamber (11) are provided by refractory material seals (13, 6).

7. Device according to claim 6 characterized in that said seals (13, 6) comprise graphite and/or silica felt seals.
